# EUROPÄISCHE PATENTANMELDUNG

(11) **EP 1 061 240 A2**
(43) Veröffentlichungstag der Anmeldung: **20.12.2000**
(21) Anmeldenummer: 00810503.3
(22) Anmeldetag: 09.06.2000
(51) Int. Cl.: F01N 7/18, B23K 1/00

(54) **Verfahren zum Verbinden von Verbindungsabschnitten einer Abgasanlage sowie Abgasanlage**

(30) Priorität: 17.06.1999 CH 113499
(71) Anmelder: SCAMBIA INDUSTRIAL DEVELOPMENTS AKTIENGESELLSCHAFT, 9494 Schaan (LI)
(72) Erfinder: Stuer, Willem Denis Maria, 8390 Knokke-Heist (BE)
(74) Vertreter: Zbinden, Paul A.

(57) **Zusammenfassung**

Zum Verbinden von Verbindungsabschnitten (2a, 3a) von mindestens einem Bestandteil einer Abgasanlage für ein Kraftfahrzeug werden metallische Verbindungsabschnitte (2a, 3a) mit einer Dicke von höchstens 1,5 mm und mit je zwei einander abgewandten Flächen (2e, 2f, 3e, 3f) derart angeordnet, dass eine dieser beiden Flächen (2e, 2f) eines Verbindungsabschnitts (2a) einer der beiden Flächen (3e, 3f) des bzw. eines andern Verbindungsabschnitts (3a) zugewandt ist. Danach werden die Verbindungsabschnitte (2a, 3a) durch Hartlöten miteinander verbunden. Dazu wird Hartlot (30) mit einem Lichtbogen bei einer Temperatur geschmolzen, die niedriger ist als die Schmelztemperaturen der Materialien, aus denen die Verbindungsabschnitte (2a, 3a) bestehen. Das Hartlot fliesst beim Hartlöten zwischen die Verbindungsabschnitte (2a, 3a) hinein und ergibt eine dauerhafte, hitze-und erschütterungsbeständige Verbindung der dünnen Verbindungsabschnitte (2a, 3a).

## Beschreibung

Die Erfindung betrifft ein Verfahren zum Verbinden von Verbindungsabschnitten von mindestens einem Bestandteil einer Abgasanlage für ein Kraftfahrzeug.

Bekannte Kraftfahrzeuge besitzen eine Abgasanlage mit mehreren Bestandteilen, wie Rohren und mindestens einem ein Gehäuse aufweisenden Katalysator und/oder Schalldämpfer. Solche Gehäuse werden häufig ihrerseits aus mehreren metallischen Bestandteilen hergestellt, die bei Verbindungsabschnitten miteinander und/oder mit Rohren und/oder sonstigen Auspuff-Bestandteilen verbunden werden. Ferner können auch Verbindungsabschnitte miteinander verbunden werden, die zu ein und demselben Bestandteil, etwa zu einem Mantel gehören, der aus einem zu einem Zylinder gebogenen Blechstück gebildet ist.

Aus der Praxis sowie zum Beispiel aus der US Patentschrift 3 093 208 A ist es bekannt, Verbindungsabschnitte von Bestandteilen von Schalldämpfer- und/oder Katalysator-Gehäusen und/oder von Rohren durch Schmelz-Schweissen miteinander zu verbinden. Beim Schmelz-Schweissen wird mit einem elektrischen Lichtbogen oder mit einer Gasflamme zu den Verbindungsabschnitten gehörendes Material geschmolzen. Das Schmelz-Schweissen kann mit oder ohne einen zusätzlichen, an der Schweissstelle zugegebenen Werkstoff erfolgen. Solche Werkstoffe haben eine Schmelztemperatur, die meistens ungefähr gleich gross wie die Schmelztemperaturen der die Verbindungsabschnitte bildenden Materialien oder ein wenig grösser oder kleiner als diese Schmelztemperaturen sind. Das Schmelz-Schweissen mit Hilfe eines elektrischen Lichtbogens oder einer Gasflamme ist jedoch nicht zum Verbinden dünner Blechteile geeignet, weil sich gerne Löcher ergeben. Ausserdem rekristallisiert das geschmolzene Material, wobei sich eine Kornvergrösserung sowie häufig Defekte an Korngrenzen und oxidierte Oberflächen ergeben. Durch die grosse Wärmeeinwirkung beim Schmelz-Schweissen werden zudem starke thermische Verformungen bewirkt, was dazu führt, dass die verschweissten Teile entweder verformt sind oder aber grosse Spannungen aufweisen. Ferner benötigt das Erstellen von Schmelz-Schweissnähten relativ viel Zeit.

Aus der JP 3 128 166 A ist ein Verfahren zum Verbinden von Verbindungsabschnitten von Stahlplatten durch Diffusions-Schweissen bekannt. Die Stahlplatten werden dazu derart angeordnet, dass ihre Ränder bei den miteinander zu verbindenden Verbindungsabschnitten aneinander anliegen. Danach wird mit einem Lichtbogen ein Hartlot geschmolzen und über den aneinander anliegenden Rändern auf ein Paar von miteinander fluchtenden Flächen der Platten aufgebracht. Wenn das Hartlot verfestigt ist und sich beim Abkühlen zusammenzieht, werden die Ränder der ebenfalls heissen Stahlplatten gegeneinander gepresst. Dies bewirkt eine Diffusions-Press-Schweissung. Bei dieser diffundieren die Materialien der beiden Platten ineinander hinein, so dass die ursprünglich die Ränder der Platten bildenden Randflächen mehr oder weniger verschwinden. Nach der Beendigung der Diffusions-Schweissung kann das Hartlot zwar wahrscheinlich noch auf den verschweissten Platten verbleiben, hat aber eigentlich keine wesentliche Funktion mehr. Da die Ränder der Platten zur Erzeugung der Diffusions-Schweissverbindung genau aneinander anstossen müssen und beim Abkühlen des Hartlots mit grossem Druck gegeneinander gepresst werden, ist dieses Diffusions-Schweissverfahren kaum für dünne Bleche mit einer Dicke von weniger als ungefähr 2 mm geeignet. Ferner müssen die aneinander anstossenden Ränder zur Ermöglichung einer Diffusions-Schweissung genau passen. Das Diffusions-Schweissverfahren ist zudem zeitraubend und insbesondere auch kaum anwendbar, um einen zum Beispiel zylindrischen, im Querschnitt kreisförmigen oder ovalen Blechmantel mit einer zum Beispiel im Allgemeinen ebenen oder konischen, ebenfalls aus Blech bestehenden Endwand eines Gehäuses zu verbinden. Zur Erstellung einer solchen Verbindung müsste nämlich mindestens einer der miteinander zu verbindenden, kreisförmigen oder ovalen Verbindungsabschnitte derart abgebogen oder abgewinkelt werden, dass die Ränder der Verbindungsabschnitte überall ohne Spalt aneinander anliegen, was praktisch kaum oder höchstens mit sehr grossem Aufwand möglich wäre. Zudem müssen die zu verbindenden Ränder sehr glatte sowie genau zueinander parallele Randflächen haben, so dass zum Beispiel durch Schneiden einer Blechtafel gebildete Ränder wahrscheinlich noch bearbeitet werden müssen, bevor sie durch Diffusions-Schweissen miteinander verbunden werden könnten. Ferner ist eine Diffusions-Schweissung mit Hilfe eines sich beim Abkühlen zusammenziehenden Hartlots nur dann möglich, wenn der thermische Längenausdehnungskoeffizient des Hartlots grösser ist als derjenige der Materialien der Verbindungsabschnitte. Dies ist jedoch bei der Anwendung von einem Hartlot auf Kupferbasis zum Beispiel für Verbindungsabschnitte aus austenitischem Stahl oder Aluminium kaum der Fall, so dass Auspuff-Bestandteile aus austenitischem Stahl oder Aluminium kaum verschweisst werden können. Zudem werden das Hartlot und die Verbindungsabschnitte beim bekannten Diffusions-Schweissverfahren offenbar auf ungefähr 1500°C, d.h. bis mindestens fast auf die Schmelztemperaturen von Stählen erhitzt, so dass bei diesem Diffusions-Schweissverfahren wie bei dem vorher beschriebenen Schmelz-Schweissverfahren eine Umkristallisierung und Kornvergrösserung des Materials der Verbindungsabschnitte stattfinden kann, welche die Materialeigenschaften der Verbindungsabschnitte verschlechtert.

Bei einem aus der JP 63 010 065 A bekannten Verbindungsverfahren werden zwei wahrscheinlich nicht für eine Abgasanlage bestimmte Teile miteinander verbunden, von denen mindestens einer aus gesintertem, metallischem Material besteht. Die beiden Teile sind plattenförmig, bilden miteinander einen rechten Winkel und begrenzen bei der Verbindungsstelle zusammen eine Nut. Zum Verbinden der beiden Teile wird mit einer Kupferelektrode ein mit Argongas abgeschirmter Lichtbogen erzeugt, wobei Kupfer von der Elektrode abschmilzt und in die Nut fliesst und die beiden Teile miteinander verbindet. Die miteinander verbundenen Teile haben Dicken, die gemäss der Zeichnung ein Vielfaches vom Durchmesser der Kupferelektrode betragen und also wahrscheinlich mindestens einige Millimeter betragen. Es wäre auch gar nicht möglich, dünne, eine Dicke von weniger als ungefähr 2 mm aufweisende Teile mit einer Nut zu versehen und in zueinander senkrechten Stellungen miteinander zu verbinden.

Es ist an sich auch bekannt, nicht für Abgasanlagen bestimmte Teile durch Hartlöten miteinander zu verbinden, wobei das Hartlöten in einem Ofen in einer Schutzgasatmosphäre oder im Vakuum oder induktiv durchgeführt wird. Beim Hartlöten im Ofen müssen die ganzen zu verbindenden Bauteile auf die Schmelztemperatur des Hartlotes erhitzt werden, was einen grossen Zeitaufwand, erhebliche Kosten, einen hohen Energieverbrauch und irreversible Veränderungen an den ganzen miteinander verbundenen Teilen sowie allfälligen Beschichtungsmaterialien und/oder allenfalls in Gehäusen angeordneten Komponenten, wie Katalysatorsubstraten, mit sich bringt. Auch beim Induktionslöten müssen die Bauteile vorzugsweise im Vakuum oder in einer Schutzgasatmosphäre verlötet werden. Auch muss bei solchen Hartlöt-Verfahren vor dem eigentlichen Lötprozess Lot und eventuell ein pastöses Flussmittel zwischen die zu verbindenden Teile eingebracht werden, so dass mindestens ein zusätzlicher Arbeitsgang nötig ist. Beim Induktions-Hartlöten wird auch ein relativ grosser Bereich der zu verlötenden Verbindungsabschnitte so stark erhitzt, dass sich in diesem relativ grossen Bereich möglicherweise irreversible Veränderungen ergeben. Aufgrund der Grösse der Induktionsspulen und weil das Hartlöten vorzugsweise in einer Schutzgas- oder Vakuumkammer erfolgen muss, ist es zudem schwierig und umständlich, Verbindungsabschnitte mit komplizierten Formen maschinell zu verschweissen. Ausserdem werden die Verbindungsstellen zwangsläufig relativ grossflächig, was oft aus ästhetischen Gründen unerwünscht ist. Aus diesen Gründen wurde bisher darauf verzichtet, Teile einer Abgasanlage durch Hartlöten miteinander zu verbinden.

Der vorliegenden Erfindung liegt die Aufgabe zu Grunde, ein Verfahren zum Verbinden von Verbindungsabschnitten von mindestens einem Bestandteil einer Abgasanlage zur Verfügung zu stellen, das ermöglicht, Nachteile der bekannten Verfahren zu vermeiden. Dabei soll insbesondere ausgehend von der JP 3 128 166 A ermöglicht werden, auch sehr dünne, beispielsweise entlang ihrer Ränder mindestens stellenweise gebogene und aus beliebigen metallischen Materialien bestehende Verbindungsabschnitte schnell, rationell und kostengünstig miteinander zu verbinden, wobei die Materialeigenschaften des bzw. jedes Bestandteils beim Verbindungsvorgang möglichst wenig beeinträchtigt und möglichst wenig Spannungen erzeugt werden sollen. Ferner sollen die gebildeten Verbindungen ausreichend hitze- sowie vibrationsfest sein, um den beim Betrieb einer Abgasanlage auftretenden Beanspruchungen dauerhaft Stand zu halten. Zudem sollen die erzeugten Verbindungen nötigenfalls vollständig dicht sein.

Diese Aufgabe wird gelöst durch ein Verfahren gemäss dem Anspruch 1.

Die Erfindung betrifft ferner eine Abgasanlage mit den Merkmalen des Anspruchs 11.

Vorteilhafte Ausgestaltungen des Verfahrens und der Abgasanlage gehen aus den abhängigen Ansprüchen hervor.

Die Erfindung ergibt im Vergleich zum Stand der Technik verschiedene Vorteile. Überraschenderweise sind die Festigkeit und insbesondere die Hitze- und Erschütterungsresistenz einer erfindungsgemäss erzeugten Hartlöt-Verbindung genügend gross, um das erfindungsgemässe Verfahren zum Verbinden von Bestandteilen eines Schalldämpfergehäuses und sogar eines im Betrieb sehr heiss werdenden Gehäuses eines Katalysators oder sogar von Bestandteilen eines unmittelbar mit einem Verbrennungsmotor verbundenen Auspuffkrümmers zu verwenden. Jeder Verbindungsabschnitt hat zwei einander abgewandte Flächen, die zum Beispiel in mindestens einer Richtung gebogen, aber vorzugsweise mindestens im Wesentlichen parallel zueinander sind. Die Verbindungsabschnitte werden gemäss der Erfindung derart angeordnet, dass eine der beiden einander abgewandten Flächen von jedem Verbindungsabschnitt einer der beiden einander abgewandten Flächen von dem bzw. einem andern Verbindungsabschnitt zugewandt ist. Zwischen diesen einander zugewandten Flächen kann mindestens stellenweise ein Spalt vorhanden sein. Dieser kann abhängig von der Form der Verbindungsabschnitte und der Fabrikationsgenauigkeit vorzugsweise mindestens 0,05 mm, vorzugsweise höchstens 1 mm und zum Beispiel meistens etwa 0,1 mm bis 0,5 mm dick sein. Das beim Hartlöten geschmolzene und vorübergehend flüssige Hartlot kann daher zwischen die einander zugewandten Flächen der Verbindungsabschnitte hinein fliessen, wobei die Eindringtiefe des Hatlots mindestens ungefähr gleich der Dicke der Verbindungsabschnitte oder deutlich grösser als diese Dicke sein kann. Dies trägt wesentlich zur Erzielung einer festen und dauerhaften Verbindung bei.

Weiter ermöglicht das erfindungsgemässe Verfahren auch dann die Herstellung einer festen und nötigenfalls gasdichten Verbindung, wenn relativ breite Spalte zwischen den zu verbindenden Verbindungsabschnitten vorhanden sind. Es können daher zum Beispiel ohne Weiteres und ohne dass eine übermässige Genauigkeit erforderlich ist, aus ursprünglich ebenen Blechstücken durch Biegen und/oder Abwinkeln Bestandteile mit Verbindungsabschnitten geformt werden, die entlang von mindestens stellenweise gebogenen Linien verlaufen und zum Beispiel einen Innenraum eines Gehäuses und/oder einen Abgas-Durchgang mindestens teilweise umschliessen.

Da Spalte zwischen den Verbindungsabschnitten vorhanden sein dürfen und sogar erwünscht sind, dürfen die Flächen der die Verbindungsabschnitte bildenden Teile ohne Weiteres eine gewisse Rauheit haben. Dies gilt auch für die freien Ränder der Verbindungsabschnitte. Bei der Herstellung der die Verbindungsabschnitte bildenden Bestandteile können daher zum Beispiel von gewalzten Blechtafeln ebene Blechstücke zugeschnitten und danach gebogen und/oder abgewinkelt werden, ohne dass die Flächen und Ränder nachbearbeitet werden müssen. Ferner sind auch beim Formen, d.h. Biegen und/oder Abwinkeln, der Blechstücke bzw. Bestandteile relativ grosse Fabrikationstoleranzen zulässig. Dies trägt zu einer wirtschaftlichen Fertigung bei.

Gemäss einer bevorzugten Ausführung der Erfindung hat mindestens einer der Verbindungsabschnitte eine Dicke von höchstens 1,5 mm. Dabei können die miteinander verbundenen Verbindungsabschnitte gleiche oder verschiedene Dicken haben.

Vorzugsweise bestehen jedoch beide Verbindungsabschnitte aus Materialien bzw. Blechteilen mit Dicken, die höchstens 1,5 mm betragen. Ferner hat zweckmässigerweise mindestens einer und für viele Zwecke vorzugsweise jeder der miteinander zu vebindenden Verbindungsabschnitte eine Materialdicke von höchstens 0,8 mm und zum Beispiel 0,3 mm bis 0,7 mm. Dies ermöglicht eine sehr leichte Ausbildung der Bestandteile, zu denen die Verbindungsabschnitte gehören.

Die die Verbindungsabschnitte aufweisenden Bestandteile können aus allen im Wesentlichen metallischen, für die Verwendung in einer Abgasanlage geeigneten, insbesondere ausreichend festen und hitzebeständigen Materialien, insbesondere im Wesentlichen aus Stählen bestehen. Mindestens einer oder jeder der miteinander verbundenen Verbindungsabschnitte kann zum Beispiel aus blankem Stahl, wie aus Baustahl und/oder aus legiertem, Chrom enthaltendem, ferritischem Stahl und/oder aus legiertem, Chrom und Nickel enthaltendem, austenitischem Stahl bestehen. Des Weiteren kann mindestens einer oder jeder der miteinander verbundenen Verbindungsabschnitte aus einseitig oder beidseitig beschichtetem Stahl, beispielsweise unlegiertem oder eventuell legiertem, aluminisiertem Baustahl bestehen. Ferner können die miteinander verbundenen Verbindungsabschnitte aus dem gleichen oder aus verschiedenen Materialien bestehen.

Die Schmelztemperatur des Hartlots soll selbstverständlich grösser sein als die sich beim Betrieb der Abgasanlage ergebenden Temperaturen der durch das Hartlot miteinander verbundenen Verbindungsabschnitte. Das Hartlot soll ferner eine Schmelztemperatur haben, die niedriger ist als die Schmelztemperaturen der Verbindungsabschnitte, so dass diese und das Hartlot beim Hartlöten zum Schmelzen des Hartlots gemäss der Erfindung nur auf Temperaturen erhitzt werden müssen, die niedriger sind als die Schmelztemperaturen der Materialien der Verbindungsabschnitte. Die Schmelztemperatur des Hartlots beträgt vorzugsweise mindestens 800°C, besser mindestens 900°C und zum Beispiel mindestens oder ungefähr 1000°C. Das Hartlot kann zum Beispiel aus Kupfer oder einer Kupfer-Legierung, beispielsweise einer Kupfer-Silizium-Legierung bzw. Silizium-Bronze oder einer andern Bronze bestehen und vorzugsweise mindestens 90 Gew.% oder sogar mindestens 95 Gew.% Kupfer enthalten. Die Schmelztemperatur des Hartlots kann dementsprechend etwa im Bereich von ungefähr 1000°C bis 1085°C liegen. Das Hartlot und die Verbindungsabschnitte können beim Hartlöten auf Temperaturen erhitzt werden, die weniger als 1500°C, besser höchstens 1400°C sowie zum Beispiel höchstens 1300°C betragen und dementsprechend deutlich unter den Schmelztemperaturen von Stählen, wie Baustählen, ferritischen Stählen und austenitischen Stählen liegen. Zum aluminisierten Stahl sei bemerkt, dass dieser bei einer oder jeder seiner beiden Flächen mit einer sehr dünnen, beispielsweise höchstens einige wenige Mikrometer dicken Schicht Aluminium versehen wurde, die jedoch mindestens zum grössten Teil in Aluminiumoxid und/oder eventuell Aluminiumnitrid ungewandelt wurde, so dass das Material nicht mehr ganz vollständig, aber doch noch zum grössten Teil und im Wesentlichen metallisch ist. Das Hartlöten ermöglicht auch eine gute Verbindung von Verbindungsabschnitten mit einander zugewandten Flächen, von denen mindestens eine durch Aluminisieren gebildet ist und im Wesentlichen aus Aluminiumoxid und/oder eventuell Aluminiumnitrid besteht. Aluminiumoxid und -nitrid haben Schmelztemperaturen, die wesentlich höher sind als diejenige von Aluminium und die beim Hartlöten erzeugten Temperaturen der Verbindungsabschnitte. Das Material der Verbindungsabschnitte wird also beim Verbinden der letzteren nicht geschmolzen, so dass die ursprünglich vorhandenen Flächen der Verbindungsabschnitte beim Hartlöten als Grenzflächen erhalten bleiben und praktisch kein Material der Verbindungsabschnitte aus diesem heraus diffundiert oder gar heraus fliesst. Da das Material der Verbindungsabschnitte beim Hartlöten nicht geschmolzen wird, können auch bei sehr dünn ausgebildeten Verbindungsabschnitten keine Löcher in diesen entstehen. Ferner wird auch die kristalline Struktur des Materials der Verbindungsabschnitte nicht oder nur relativ wenig verändert, wobei insbesondere auch praktisch keine Kornvergrösserung stattfindet.

Bei einer besonders bevorzugten Ausführungsform des erfindungsgemässen Verfahrens wird das Hartlot durch einen Lichtbogen geschmolzen. Bei dieser Ausführungsform ist zusätzlich der Energieverbrauch wesentlich kleiner als beim Schmelz-Schweissen oder beim Hartlöten im Ofen. Durch die bei dieser Ausführungsform relativ geringe und lokal begrenzte Erwärmung der Verbindungsabschnitte wird auch nur sehr wenig Material von Strukturveränderungen, Phasenübergängen und allenfalls Kornvergrösserung betroffen. Ausserdem ergeben sich nur wenig Spannungen und Verformungen. Ferner können die miteinander verlöteten Verbindungsabschnitte relativ schmal und insbesondere schmäler als beim Hartlöten in einem Ofen sein. Zusätzlich ermöglicht diese bevorzugte Ausführungsform eine viel grössere Prozessgeschwindigkeit als das konventionelle Hartlöten im Ofen oder das induktive Hartlöten oder das Schmelz-Schweissen, da nur wenig Wärme zugeführt werden muss und so das Verfahren mit hoher Geschwindigkeit ablaufen kann. Eine Hartlöt-Verbindung oder -Naht kann mit Hilfe eines Lichtbogens entlang den miteinander zu verbindenden Verbindungsabschnitte ohne weiteres mit einer Vorschubgeschwindigkeit von mindestens 1 m/min und zum Beispiel sogar 3 - 6 m/min gebildet werden. Ausserdem können kommerziell erhältliche, an sich für das Lichtbogenbeispielsweise das MIG-Schweissen gefertigte Vorrichtungen benutzt werden. Solche Vorrichtungen können für die automatische Bildung einer nahtförmigen Verbindung programmierbar sein, so dass auch eine Anpassung an verschiedene Formen der zu verbindenden Teile praktisch ohne Aufwand erfolgen kann und insbesondere nicht verschiedene Werkzeuge bedingt. Dies vergrössert die Effizienz des Verfahrens noch zusätzlich und bringt enorme Kosteneinsparungen mit sich. Eventuell kann das Hartlot jedoch auch mit einer Gasflamme oder durch eine andere Methode mit temporärer Wärmezufuhr zu einem kleinen Bereich der Verbindungsabschnitte geschmolzen werden.

Im Folgenden werden Ausführungsbeispiele des erfindungsgemässen Verfahrens und der erfindungsgemässen Abgasanlage anhand einer Zeichnung noch näher beschrieben.

In der Zeichnung zeigt
die Figur 1 einen Teil eines Längsschnittes durch die zusammengesetzten Bestandteile eines Schalldämpfers,
die Figur 2 eine vergrösserte Darstellung des Ausschnittes II der Figur 1 sowie eine Elektrode zum Verbinden der dargestellten Verbindungsabschnitte durch Hartlöten,
die Figur 3 den gleichen Ausschnitt II nach dem Verlöten,
die Figur 4 einen in der Figur 3 mit IV bezeichneten Ausschnitt in noch grösserem Massstab, wobei auch die Wärmeeinflusszone dargestellt ist,
die Figur 5 den Ausschnitt V aus der Figur 1 in grösserem Massstab mit verlöteten Verbindungsabschnitten,
die Figur 6 einen Längsschnitt durch einen ganzen, fertig verlöteten Schalldämpfer,
die Figur 7 einen Ausschnitt aus einem Längsschnitt durch einen anderen Schalldämpfer,
die Figur 8 einen Ausschnitt aus einem Längsschnitt durch einen weiteren Schalldämpfer,
die Figur 9 einen Querschnitt durch einen Wand-Bereich eines Auspuffkrümmers und
die Figur 10 einen Querschnitt durch einen Wand-Bereich eines andern Auspuffkrümmers.

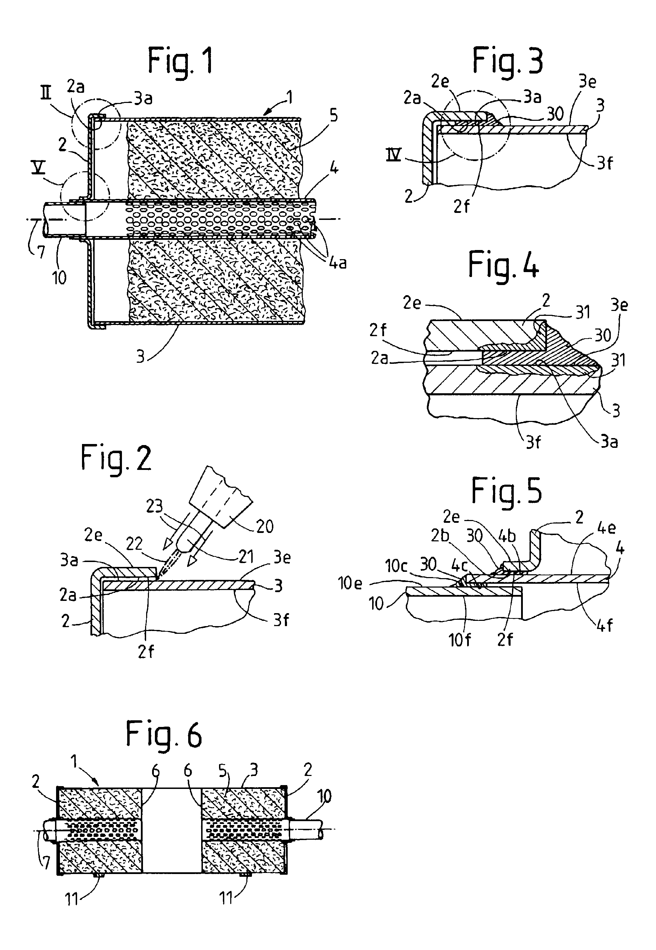

Das Gehäuse des in den Figuren 1 bis 6 dargestellten Schalldämpfers 1 weist zwei Endwände 2 und einen Mantel 3 auf. Jede Endwand 2 besteht aus einem einstückigen Blechteil und hat zum Beispiel einen ringförmigen, ungefähr ebenen Hauptabschnitt, einen äusseren Verbindungsabschnitt 2a, einen inneren Verbindungsabschnitt 2b und zwei einander abgewandte, im Wesentlichen zueinander parallele Flächen, nämlich eine äussere Fläche 2e und eine innere Fläche 2f. Der Mantel 3 besteht ebenfalls aus einem einstückigen Blechteil und ist hülsen- und/oder rohrförmig, vollständig zylindrisch sowie im Querschnitt zum Beispiel ungefähr kreisförmig oder ungefähr oval. Die beiden einander abgewandten Endabschnitte des Materials dienen als Verbindungsabschnitte 3a. Der Mantel hat ferner zwei einander abgewandte, im Wesentlichen zueinander parallele Flächen, nämlich eine äussere Fläche 3e und eine innere Fläche 3f. Der äussere Verbindungsabschnitt 2a jeder Endwand 2 ist vom Hauptabschnitt der letzteren weg zur jeweils andern Endwand hin abgebogen und/oder abgewinkelt, bildet einen Kragen und umschliesst einen der Verbindungsabschnitte 3a des Mantels 3. Der äussere Verbindungsabschnitt 2a jeder Endwand 2 und die beiden Verbindungsabschnitte 3a des Mantels 3 verlaufen entsprechend der Querschnittsform des Mantels entlang von ungefähr kreisförmigen oder ovalen Linien und haben ungefähr kreisförmige oder ungefähr ovale Ränder. Der innere Verbindungsabschnitt 2b jeder Endwand 2 ist von deren Hauptabschnitt und von der jeweils andern Endwand weg abgebogen und/oder abgewinkelt, bildet ebenfalls einen Kragen und begrenzt eine Öffnung. Die beiden Endwände 2 und der Mantel 3 sind bei den Verbindungsabschnitten 2a, 3a miteinander durch Hartlöten verbunden.

Weiter weist der Schalldämpfer 1 zwei innere Rohre 4 auf, die zum Beispiel mit Perforationen 4a versehen sind und je zwischen einer der beiden Endwände 2 und einer eventuell ebenfalls perforierten Zwischenwand 6 verlaufen. Jedes innere Rohr 4 durchdringt die vom inneren Verbindungsabschnitt 2b einer Endwand 2 begrenzte Öffnung und hat dort einen Verbindungsabschnitt 4b und an seinem aus dem Gehäuse herausragenden Ende einen Verbindungsabschnitt 4c. Jedes innere Rohr 4 hat ferner eine äussere Fläche 4e sowie eine innere Fläche 4f. Die Zwischenwände 6 sind am Mantel 3 durch Klemmen und/oder durch Hartlöten befestigt. Die beiden je durch eine Endwand 2, eine Zwischenwand 6, einen Teil des Mantels 3 und eines inneren Rohres 4 gebildeten Zwischenräume können mit einem wärmeisolierenden und schallabsorbierenden, Fasern aufweisenden Isoliermaterial 5 wie beispielsweise Glasfasern, Basaltfasern, Steinwolle oder einem ähnlichen Material gefüllt sein. Die inneren Rohre 4 und die Endwände 2 des Gehäuses sind bei den Verbindungsabschnitten 2b, 4b miteinander durch Hartlöten verbunden. Das Gehäuse des Schalldämpfers ist an beiden Enden mit einem Auspuffrohr 10 verbunden. Dieses ragt in den Verbindungsabschnitt 4c hinein, hat dort einen Verbindungsabschnitt 10c und ist bei diesem durch Hartlöten mit dem Verbindungsabschnitt 4c des inneren Rohrs 4 verbunden. Jedes Auspuffrohr hat eine äussere Fläche 10e und eine zu dieser parallele, innere Fläche 10f. Die Rohre 4 und 10 sowie ihre Verbindungsabschnitte sind beispielsweise im Querschnitt kreisförmig. Der innere Verbindungsabschnitt 2b der Endwände ist dementsprechend ebenfalls kreisförmig. Die Endwände 2, der Mantel 3, die inneren Rohre 4, die Zwischenwände 6 und die Ansätze des Auspuffrohres 10 bestehen vorzugsweise aus Stahl, beispielsweise aus austenitischem, rostfreiem Chromstahl oder Chromnickelstahl. Sie sind beispielsweise so ausgestaltet und zusammengesetzt, dass sie rotationssymmetrisch bezüglich einer Achse 7 sind. Der Schalldämpfer 1 weist noch Halter 11 auf, die zu seiner Befestigung am Fahrzeugkörper, d.h. an der Karosserie und/oder am Gestell eines Kraftfahrzeuges dienen.

Zur Bildung der Endwände 2, des Mantels 3 und der Zwischenräume 6 können zum Beispiel Blechstücke mit den erforderlichen Umrissformen von Blechtafeln abgeschnitten und zugeschnitten werden. Diese Blechstücke sind höchstens 1,5 mm, zweckmässigerweise höchstens 0,8 mm, vorzugsweise 0,3 mm bis 0,7 mm und zum Beispiel ungefähr 0,5 mm dick. Diese Blechstücke sind ursprünglich eben und werden dann derart abgebogen und/oder abgewinkelt, dass sie die gewünschten Formen der Wände 2, 6 und des Materials 3 aufweisen. Wenn das zur Bildung des Mantels 3 dienende Blechstücke zu einer Hülse gebogen ist, können zwei in der Längsrichtung des Mantels verlaufende, gerade, zur Achse 7 parallele, einander überlappende Ränder bzw. Verbindungsabschnitte des Blechstückes miteinander verbunden werden, so dass das Blechstück den im Querschnitt in sich geschlossenen Mantel bildet. Diese geradlinige Verbindung kann zum Beispiel durch Widerstands-Schweissen oder eventuell durch Hartlöten erzeugt werden. Die Rohre 4 und 10 wurden zum Beispiel ebenfalls aus ursprünglich ebenen Blechstücken hergestellt, die gebogen und danach bei Längsrändern zum Beispiel in konventioneller Weise durch Hochfrequenz-Schweissen mit sich selbst verbunden werden. Die Wände bzw. das Material der Rohre ist zweckmässigerweise ebenfalls höchstens 1,5 mm dick. Das Material der Rohre kann aber eventuell ein wenig dicker sein als dasjenige der Endwände des Mantels und der Zwischenwände des Gehäuses und zum Beispiel eine Dicke von 0,7 mm bis etwa 1,2 mm haben. Bei einer vorteilhaften Leichtbauweise ist das Material der Rohre jedoch auch nur höchstens 0,8 mm und beispielsweise 0,3 mm bis 0,7 mm dick. Wenn ein Schalldämpfer der vorstehend beschriebenen Art zusammengesetzt werden soll, werden in einem ersten Schritt die Zwischenwände 6 und die vorzugsweise bereits beispielsweise durch Hartlöten oder eventuell Schweissen mit ihnen verbundenen inneren Rohre 4 in den Mantel 3 geschoben, die Zwischenwände im Mantel befestigt und der Zwischenraum mit Isoliermaterial 5 aufgefüllt. Das Isoliermaterial 5 wird beim Einbringen in das Gehäuse zum Beispiel so zusammengedrückt, dass es nach dem anschliessenden Aufsetzen der Endwände 2 gemäss der Figur 1 durch einen Zwischenraum von den Endwänden 2 getrennt ist. Anschliessend werden der Mantel 3, die Endwände 2, die inneren Rohre 4 und die äusseren Rohre 10 bei den gebogenen, um den Innenraum des Gehäuses des Schalldämpfers 1 und/oder um Abgas-Durchgänge der Rohre 4, 10 herum verlaufenden Verbindungsabschnitten 2a, 2b, 3a, 4a, 4b, 10c gemäss der Erfindung durch Hartlöten miteinander verbunden.

Dies kann zum Beispiel automatisch mit einer Vorrichtung geschehen. Eine solche Vorrichtung zum automatisierten Hartlöten der Bestandteile des Abgassystens weist eine in der nicht massstabgetreuen Figur 2 nur schematisch dargestellte Halterung 20 sowie eine im Wesentlichen aus Hartlot bestehende Elektrode 21 auf. Die Halterung 20 hat an ihrer Vorderseite noch eine beispielsweise um die Elektrode 21 herum verlaufende ringförmige Düse oder einen Kranz von Düsen, aus der bzw. denen ein Schutzgas 23 wie Argon oder Kohlendioxid der Elektrode 21 entlang nach vorne strömen kann. Die Elektrode 21 hat hier die Form eines Drahtes mit einer Dicke im Bereich von 0,3 mm bis 1,2 mm oder bis 1,5 mm und beispielsweise ungefähr 1 mm.

Der Vorgang des Hartlötens von Verbindungsabschnitten sei hier als Beispiel für die Verbindungsabschnitte 2a und 3a näher beschrieben. In einem ersten Schritt wird die Elektrode 21 kurzzeitig mit mindestens einem der Verbindungsabschnitte 2a und 3a in Kontakt gebracht und eine elektrische Spannung angelegt, so dass ein grosser Strom fliesst. Dann wird die Elektrode 21 zurückgezogen und in einem Abstand von typischerweise einigen Millimetern belassen, wobei ein in Fig. 2 ersichtlicher elektrischer Lichtbogen 22 zwischen der Elektrode 21 und den zu verlötenden Verbindungsabschnitten 2a, 3a entsteht, wie das von der Lichtbogenschweiss-Technik her bekannt ist. Der Lichtbogen 22 erhitzt sowohl die sich in seiner Nähe befindenden Bereiche der Verbindungsabschnitte 2a, 3a als auch das freie Ende der Elektrode 21. Die Wärmekapazität des dünnen Drahtes, der die Elektrode 21 bildet, ist kleiner als diejenige der zu verlötenden Gehäuse-Bestandteile. Ferner und vor allem ist die Schmelztemperatur des Lotes niedriger als diejenigen der Materialien, aus denen diese Gehäuse-Bestandteile bestehen. Die Elektrode 21 beginnt daher zu schmelzen, während die Verbindungsabschnitte im festen Zustand bleiben. Dabei gelangt Hartlot auf die Verbindungsabschnitte 2a, 3a, wie es in den Figuren 3 und 4 dargestellt und mit 30 bezeichnet ist. Das geschmolzene Hartlot 30 fliesst auch in den Spalt zwischen den zu den Verbindungsabschnitten 2a, 3a gehörenden, einander zugewandten Bereichen der Flächen 2f und 3e hinein. Wenn die lokale Wärmezufuhr bei einem Bereich der Verbindungsabschnitte 2a, 3a beendet wird, erstarrt dort das Hartlot 30 und verbindet so die Verbindungsabschnitte 2a, 3a dicht sowie druck- und zugfest. Wie das auch bei der MIG-Schweisstechnik bekannt ist, ist die Halterung 20 der Elektrode 21 nun so ausgebildet und mit Steuerungsmitteln versehen, dass der Draht, der die Elektrode 21 bildet, laufend nachgeführt und so die Länge des aus der Halterung 20 herausragenden Teils der Elektrode 21 sowie ihr Abstand zu den Verbindungsabschnitten 2a, 3a konstant gehalten wird. Aus der Düse bzw. dem Düsenkranz der Halterung 20 strömt während des Hartlöt-Vorganges ein Schutzgas 23. Dieses bildet einen die Elektrode sowie den Lichtbogen umhüllenden Strahl und schützt das geschmolzene Hartlot 30 und die mit diesem in Kontakt kommenden Flächen der Verbindungsabschnitte 2a, 3a gegen einen Kontakt mit der Umgebungsluft. Dadurch wird die Oxidation des geschmolzenen Hartlotes sowie der Verbindungsabschnitte 2a, 3a verhindert oder zumindest minimiert. Beim Hartlötvorgang werden beispielsweise die zu verbindenden Gehäuse-Bestandteile relativ zur Halterung 20 und der Elektrode 21 derart bewegt, dass die Verbindungsabschnitte 2a, 3a über ihre ganze Länge verlötet und um das ganze Gehäuse herum durch eine Hartlöt-Verbindung bzw. -Naht miteinander verbunden werden. Selbstverständlich können auch die zu verbindenden Teile in Ruhe gehalten und die Halterung 20 sowie die Elektrode 21 bewegt werden. Wesentlich ist lediglich, dass die Bewegung mit derjenigen Geschwindigkeit erfolgt, die ermöglicht, dass die für eine zweckmässige Verbindung der Verbindungsabschnitte notwendige Menge an Hartlot schmilzt, dabei aber die Verbindungsabschnitte 2a, 3a nicht übermässig aufgeheizt und insbesondere nirgends geschmolzen werden. Speziell die in der Figur 4 dargestellte Wärmeeinflusszone 31 soll möglichst klein bleiben. Unter der Wärmeeinflusszone wird dabei derjenige Bereich der zu verbindenden Bestandteile verstanden, in welchem die beim Hartlöt-Vorgang stattfindende Erhitzung zu irreversiblen Veränderungen der inneren Struktur der Materialien der Bestandteile, beispielsweise zu einer Umkristallisation, Phasenänderung und/oder Kornvergrösserung führt. Da das Hartlot durch einen Lichtbogen 22 geschmolzen wird, ist die Wärmeeinflusszone 31 beim vorstehend beschriebenen Verfahren viel kleiner als sie beispielsweise beim Schmelz-Schweissen der Teile oder beim Hartlöten in einem Ofen wäre.

Die inneren Rohre 4 und Zwischenwände 6 können vor dem Verbinden der Endwände mit dem Mantel zum Beispiel ebenfalls durch das vorgängig beschriebene Lichtbogen-Hartlötverfahren miteinander verbunden werden. Die Zwischenwände können vor dem Verbinden der Endwände mit dem Mantel im letzteren festgeklemmt oder durch das Lichtbogen-Hartlöt-Verfahren fest mit dem Mantel verbunden werden. Jedes innere Rohr 4 wird - beispielsweise ebenfalls vor dem Verbinden der Endwände 2 mit dem Mantel 3 - beim Verbindungsabschnitt 4b zum Beispiel derart durch Hartlöten mit dem inneren Verbindungsabschnitt 2b einer Endwand 2 verbunden, dass das innere Rohr ein wenig über die Endwand 2 hinaus ragt, wie es besonders deutlich in Fig. 5 ersichtlich ist.

Anschliessend an das Verlöten der einzelnen Teile des Schalldämpfers 1 wird der Verbindungsabschnitt 4c jedes inneren Rohres 4 durch Hartlöten mit einem Verbindungsabschnitt 10c von einem der Auspuffrohre 10 verbunden. Die an den inneren Rand der Endwand 2 und den äusseren Rand des inneren Rohrs 4 anschliessenden Verbindungsabschnitte 2b bzw. 4c sind gemäss Fig. 5 in axialer Richtung etwas gegeneinander versetzt. Es wäre jedoch eventuell auch möglich, das innere Rohr 4 bündig mit dem inneren Rand der zugeordneten Endwand 2 anzuordnen, so dass sich die Verbindungsabschnitte 2e und 10c ungefähr bei ein und derselben Stelle der Achse 7 befinden und die Verbindungsabschnitte 4b sowie 4c zusammenfallen. Ein inneres Rohr könnte dann zum Beispiel gleichzeitig mit der zugeordneten Endwand und dem zugeordneten Auspuffrohr 10 verlötet werden, so dass eine Endwand 2 und die zugeordneten Rohre 4, 10 durch eine gemeinsame, zusammenhängende Hartlöt-Naht miteinander verbunden werden. Beim Verlöten eines inneren Rohrs 4 mit einer Endwand 2 und einem Auspuffrohr 10 fliesst - wie in Fig. 5 ersichtlich - Hartlot zwischen die einander zugewandten Flächen der Verbindungsabschnitte. Das Befestigen der Halter 11 am Schalldämpfer 1 kann, muss aber nicht mit dem erfindungsgemässen Verfahren erfolgen. Die Halter 11 können beispielsweise einen durch Hartlöten am Mantel 3 befestigten, bügelförmigen Bestandteil aus Stahl aufweisen. Beim Verlöten des Schalldämpfers mit dem Auspuffrohr, beim Befestigen der Halter 11 und/oder bei der späteren Montage des Schalldämpfers 1 am Kraftfahrzeug und/oder eventuell noch beim Betrieb des Kraftfahrzeuges dehnt sich das wie vorstehend erwähnt vorher zusammengedrückte Isoliermaterial 5 aufgrund von Erschütterungen wieder aus und füllt in der Folge die ganzen Zwischenräume zwischen den Endwänden 2 und den Zwischenwänden 6 aus.

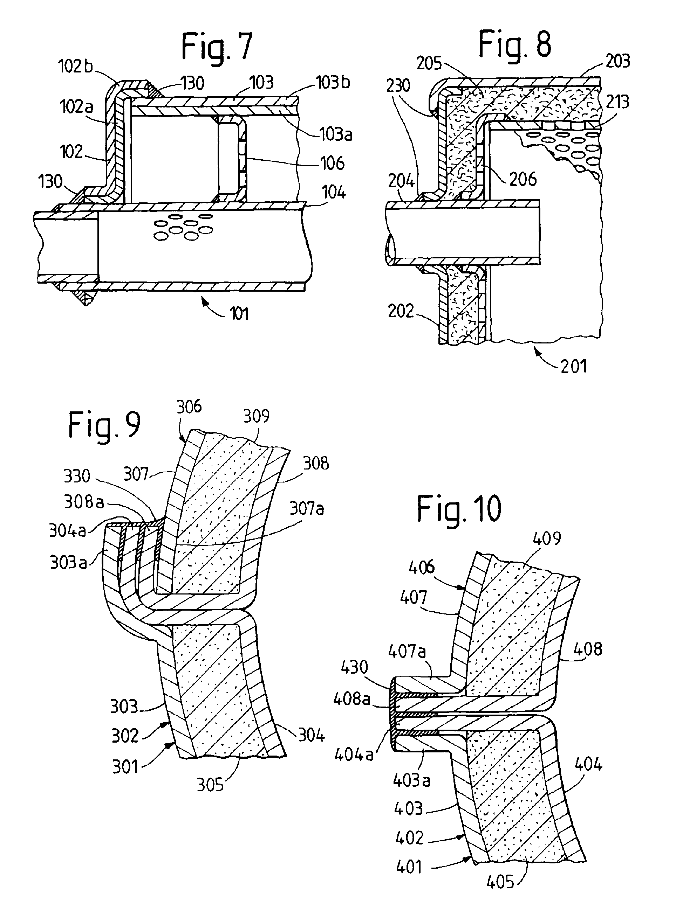

Die Figur 7 zeigt einen Schalldämpfer 101, dessen Einzelteile ebenfalls mit dem erfindungsgemässen Lichtbogen-Hartlöt-Verfahren miteinander verbunden worden sind. Der Schalldämpfer 101 weist ein Gehäuse mit einem Mantel 103 und Endwänden 102 auf. Sowohl Mantel 103 als auch Endwände 102 sind aus einem inneren Blech 103a, 102a und einem äusseren Blech 103b, 102b gefertigt, die aufeinander liegen und vorzugsweise aus verschiedenen metallischen Materialien hergestellt sind. Der Schalldämpfer 101 besitzt ferner beispielsweise perforierte Zwischenwände 106 und mindestens ein inneres, beispielsweise perforiertes Rohr 104. Die Endwände 102 sind mit dem erfindungsgemässen Lichtbogen-Hartlöt-Verfahren am inneren Rohr 102 und am Mantel 103 befestigt worden. Das zur Fixierung dienende Hartlot 130 ist dabei so aufgetragen worden, dass auch die inneren Bleche 102a und die äusseren Bleche 102b, die die Endwände bilden, aneinander befestigt sind. Das innere Mantel-Blech 103a und das äussere 103b Mantel-Blech sind hier durch eine in Längsrichtung des Schalldämpfers 101 verlaufende, durch Widerstands-Schweissen gebildete Schweissnaht oder durch eine erfindungsgemässe Hartlötverbindung aneinander befestigt. Die Zwischenwände 106 sind ebenfalls mit dem erfindungsgemässen Lichtbogen-Hartlöt-Verfahren am inneren Rohr 102 und am Mantel 103 befestigt und dienen unter anderem auch der Stabilisierung. Die Zwischenräume zwischen einer Zwischenwand 106, einem Teil des Mantels 103 und eines inneren Rohres 104 sowie einer Endwand 102 oder einer weiteren Zwischenwand 106 können gemäss der Figur 7 hohl oder mit einem nicht dargestellten, wärmedämmenden und schallabsorbierenden Isoliermaterial gefüllt sein.

Eine weitere Variante eines erfindungsgemässen Schalldämpfers 201 ist in der Figur 8 teilweise dargestellt. Dieser Schalldämpfer weist einen äusseren Mantel 203 und äussere Endwände 202 auf, die mit dem erfindungsgemässen Hartlöt-Verfahren aneinander bzw. an einem Rohr 204 befestigt sind. Der äussere Mantel 203 des Schalldämpfers gemäss Fig. 8 unterscheidet sich dabei dadurch vom Mantel 3 des anhand der Figuren 1 bis 6 beschriebenen Schalldämpfers, dass er einen zylindrischen Hauptabschnitt und an dessen Enden gegen innen, d.h. gegen die Achse des Gehäuses hin abgebogene und/oder abgewinkelte Verbindungsabschnitte hat. Weiter besitzt der Schalldämpfer einen inneren Mantel 213 und innere Endwände 206, die ebenfalls mit dem erfindungsgemässen Verfahren aneinander und am Rohr 204 befestigt sind. Das in Fig. 8 ersichtliche Rohr 204 kann dabei als inneres, nur wenig aus dem Gehäuse herausragendes Rohr ausgebildet und ausserhalb des Gehäuses mit einem nicht gezeichneten, äusseren Auspuffrohr verbunden sein oder selbst als Auspuffrohr dienen und beispielsweise mit einem andern Auspuff-Bestandteil, wie einem andern Schalldämpfer oder einem Katalysator oder einem flexiblen Wellrohr, verbunden sein. Beim Hartlöten werden die Verbindungsabschnitte der Endwände, Mäntel und Rohre mit einem Hartlot 230 miteinander verbunden. Der innere Mantel 213 und die inneren Endwände 206 sind zumindest stellenweise perforiert. Zwischen dem äusseren Mantel 203 und den äusseren Endwänden 202 einerseits und dem innerem Mantel 213 und den inneren Endwänden 206 andererseits ergibt sich ein Zwischenraum, der mit Isoliermaterial 205 gefüllt ist.

Bei den Varianten gemäss den Figuren 7 und 8 können die inneren und äusseren Bleche bzw. Endwände und Mäntel aus gleichen oder verschiedenen Materialien bestehen. Die inneren Bleche 102a, 103a und die inneren Wände 206 und der innere Mantel 213 können zum Beispiel aus überzugsfreiem, austenitischem, rostfreiem Stahl bestehen. Die äusseren Bleche 102b, 103b, der äussere Mantel 203 und die äusseren Endwände 202 können zum Beispiel aus aluminisiertem Baustahl bestehen. Im Übrigen können die inneren und äusseren Bleche bzw. Endwände und Mäntel gleiche oder verschiedene Dicken haben.

Soweit vorgängig nicht anderes geschrieben wurde, können die Schalldämpfer gemäss den Figuren 7, 8 ähnlich hergestellt werden und ausgebildet sein wie der anhand der Figuren 1 bis 6 beschriebene Schalldämpfer. Zu den Figuren 7, 8 sei noch angemerkt, dass diese etwas vereinfacht gezeichnet wurden und dass das Hartlot 130 bzw. 230 beim Hartlöten auch bei diesen Schalldämpfer-Varianten zwischen die einander zugewandten Flächen der miteinander verbundenen Verbindungsabschnitte fliessen kann.

Das erfindungsgemässe Verfahren eignet sich aber nicht nur zum Verbinden von Verbindungsabschnitten von Teilen von Schalldämpfern oder von Schalldämpfern und Auspuffrohren, sondern auch zum Verbinden von andern Teilen einer Abgasanlage.

Das erfindungsgemässe Hartlöt-Verfahren kann zum Beispiel zum Verbinden von Bestandteilen eines Auspuffkrümmers dienen, der mehrere zum unmittelbaren Anschliessen an Abgasausgänge eines Verbrennungsmotors bestimmte Zuleitungen und einen Sammler aufweist, in den die Zuleitungen münden. Der Auspuffkrümmer kann zum Beispiel für jede Zuleitung ein Innenrohr und für den Sammler eine Sammel-Innenwand und eine mehrteilige Aussenwand haben, welche die Innenrohre der Zuleitungen und die Sammel-Innenwand umschliesst. Der Auspuffkrümmer kann eventuell noch mit einem stromabwärts auf ihn folgenden Katalysator zu einer Einheit integriert sein. Der Auspuffkrümmer und der allenfalls mit ihm zusammengebaute Katalysator kann zum Beispiel im Allgemeinen ähnlich ausgebildet sein, wie es aus der am 12.04.2000 veröffentlichten EP 0 992 659 A bekannt ist.

Die Figur 9 zeigt einen Teil eines solchen, mit 301 bezeichneten Auspuffkrümmers, wobei nur ein Bereich der mehrteiligen Aussenwand gezeichnet ist. Diese hat zwei Verbund-Wandelemente 302, 306, die je ungefähr eine Hälfte der Aussenwand bilden. Jedes Verbund-Wandelement 302, 306 hat eine äussere Schale 303 bzw. 307, eine innere Schale 304 bzw. 308 und eine zwischen den beiden Schalen angeordnete Schicht wärmedämmendes und schallabsorbierendes Isoliermaterial 305 bzw. 309. Die vier Schalen bestehen aus Blech, dessen Dicke wiederum höchstens 1,5 mm, vorzugsweise höchstens 0,8 mm und zum Beispiel 0,3 mm bis 0,7 mm beträgt. Die vier Schalen 303, 304, 307, 308 haben in der Nähe ihrer seitlichen Aussenränder und zum Beispiel auch noch bei seitlichen Rändern von fingerförmigen, den verschiedenen Zuleitungen zugeordneten Abschnitten Verbindungsabschnitte 303a, 304a, 307a, 308a. Die Verbindungsabschnitte 303a, 304a, 308a sind im Querschnitt gemäss Fig. 4 um den Rand der Schale 307 herum gebogen, so dass der Verbindungsabschnitt 308a mindestens annähernd an der Aussenfläche der äusseren Schale 307 anliegt, der Verbindungsabschnitt 304a mindestens annähernd am Verbindungsabschnitt 308a anliegt und der Verbindungsabschnitt 303a mindestens annähernd am Verbindungsabschnitt 304a anliegt. Die vier Verbindungsabschnitte verlaufen zum Beispiel entlang einer mindestens stellenweise gebogenen Linie und werden bei der Herstellung des Auspuffkrümmers 301 gleichzeitig durch Hartlöten miteinander verbunden, wobei das Hartlot 330 zwischen einander zugewandte Flächen der Verbindungsabschnitte hinein fliessen kann.

Der zum Teil in Fig. 10 ersichtliche Auspuffkrümmer 401 ist weitgehend ähnlich ausgebildet wie der Auspuffkrümmer gemäss Fig. 9 und hat insbesondere auch zwei Verbund-Wandelemente 402 und 406 mit je zwei Schalen 403, 404 bzw. 407, 408 und einer Schicht Isoliermaterial 405 bzw. 409. Jede Schale hat bei ihren seitlichen Rändern einen Verbindungsabschnitt 403a, 403b, 407a, 408a. Der Auspuffkrümmer gemäss Fig. 10 unterscheidet sich jedoch von denjenigen gemäss Fig 9 dadurch, dass alle Verbindungsabschnitte 403a, 404a, 407a, 408a vom Hauptabschnitt der betreffenden Schale weg nach aussen abgebogen und/oder abgewinkelt sind. Die vier Verbindungsabschnitte werden beim Herstellen des Auspuffkrümmers gleichzeitig durch Hartlöten miteinander verbunden, wobei geschmolzenes Hartlot 430 zwischen den einander benachbarten Verbindungsabschnitten hineinfliessen kann.

Es können auch noch Verbindungsabschnitte von anderen Bestandteilen von Abgasanlagen und den Auspuffen von diesen durch das erfindungsgemässe Lichtbogen-Hartlöt-Verfahren miteinander verbunden werden. So können zum Beispiel Verbindungsabschnitte miteinander verbunden werden, die zu folgenden Bestandteilen gehören:
- zu verschiedenen Bestandteilen des Gehäuses eines Katalysators oder eines Gehäuses von einem mit einem Schalldämpfer kombinierten Katalysator und/oder
- zu einem Bestandteil eines solchen Gehäuses und einem Rohr und/oder einem Halter
- zu einem Bestandteil eines Auspuffkrümmers und eines anderen Aufpuffteils und/oder
- zu Bestandteilen eines deformierbaren, insbesondere biegbaren Auspuff-Verbindungs-Elementes, das einen Durchgang für das Abgas begrenzt und beispielsweise ein flexibles Wellrohr sowie mindestens einen anderen, mit diesem verbundenen Teil, wie eine Hülse, einen Ring, einen muffen- oder flanschförmigen Verbindungsteil und dergleichen aufweist, und/oder
- zu einem Bestandteil eines deformierbaren, insbesondere biegbaren Auspuff-Verbindungs-Elementes und einem andern Auspuffteil, beispielsweise einem Rohr oder Katalysatorgehäuseteil oder Schalldämpfergehäuseteil und/oder
- zu verschiedenen Rohren und/oder
- zu einem einen Abgas-Durchgang begrenzenden, muffenförmigen Verbindungsorgan und einem Gehäuse oder Rohr.

Abschliessend sei noch erwähnt, dass das vorstehend anhand von Beispielen beschriebene Verfahren natürlich keineswegs die einzige mögliche Ausführungsform der Erfindung darstellt, sondern im Rahmen der durch den Anspruch 1 gegebenen Definition noch in mancher Hinsicht abgeändert werden kann. So ist es zwar zweckmässig, aber keinesfalls notwendig, dass das Hartlot aus Kupfer oder einer Kupferlegierung besteht. Es kann auch ein anderes Metall sein, dessen Schmelztemperatur kleiner ist als diejenige der zu verbindenden Materialien. Auch ist nicht notwendig, dass die Elektrode 21 aus dem Hartlot-Material besteht. Es kann auch ohne weiteres in Analogie zum "TIG"-Schweissen eine Elektrode mit einem hohen Schmelzpunkt, zum Beispiel aus Wolfram gewählt werden. In diesem Fall wird dem Lichtbogen ein separater, im Wesentlichen aus dem Hartlot-Material bestehender und während des Lötvorganges laufend nachgeführter Draht zugeführt. Das von diesem Draht abgeschmolzene Material bildet dann das Hartlot. Die beschriebenen Lichtbogen-Hartlöt-Verbindungen werden vorzugsweise ohne Zusatz eines Flussmittels erstellt, was zu einem einfachen Verfahren beiträgt. Nötigenfalls kann jedoch noch ein Flussmittel zugeführt werden. Eventuell kann sogar die Hartlot aufweisende Elektrode noch einen Mantel oder Kern aus einem Flussmittel aufweisen.

## Patentansprüche

1. Verfahren zum Verbinden von Verbindungsabschnitten (2a, 3a, 2b, 4b, 4c, 10c, 303a, 304a, 307a, 308a, 403a, 404a, 407a, 408a) von mindestens einem Bestandteil einer Abgasanlage für ein Kraftfahrzeug, dadurch gekennzeichnet, dass jeder Verbindungsabschnitt (2a, 3a, 2b, 4b, 4c, 10c, 303a, 304a, 307a, 308a, 403a, 404a, 407a, 408a) aus im Wesentlichen metallischem Material mit zwei einander abgewandten Flächen (2e, 2f, 3e, 3f, 4e, 4f, 10e, 10f) gebildet wird, dass die zu verbindenden Verbindungsabschnitte (2a, 3a, 2b, 4b, 4c, 10c, 303a, 304a, 307a, 308a, 403a, 404a, 407a, 408a) derart angeordnet werden, dass mindestens ein Teil von mindestens einer der beiden Flächen (2e, 2f, 3e, 3f, 4e, 4f, 10e, 10f) von jedem Verbindungsabschnitt (2a, 3a, 2b, 4b, 4c, 10c, 303a, 304a, 307a, 308a, 403a, 404a, 407a, 408a) einer der beiden Flächen (2e, 2f, 3e, 3f, 4e, 4f, 10e, 10f) des bzw. eines andern Verbindungsabschnitts (2a, 3a, 2b, 4b, 4c, 10c, 303a, 304a, 307a, 308a, 403a, 404a, 407a, 408a) zugewandt ist, dass die Verbindungsabschnitte (2a, 3a, 2b, 4b, 4c, 10c, 303a, 304a, 307a, 308a, 403a, 404a, 407a, 408a) durch Hartlöten mit einem Hartlot (30, 130, 230, 330, 430) miteinander verbunden werden, das zum Hartlöten geschmolzen wird, und dass das Hartlot (30, 130, 230, 330, 430) und die Verbindungsabschnitte (2a, 3a, 2b, 4b, 4c, 10c, 303a, 304a, 307a, 308a, 403a, 404a, 407a, 408a) auf Temperaturen erhitzt werden, die niedriger sind als Schmelztemperaturen der die Verbindungsabschnitte (2a, 3a, 2b, 4b, 4c, 10c, 303a, 304a, 307a, 308a, 403a, 404a, 407a, 408a) im Wesentlichen bildenden Materialien.

2. Verfahren nach Anspruch 1, dadurch gekennzeichnet, dass das Hartlot (30, 130, 230, 330, 430) durch einen Lichtbogen (22) geschmolzen wird, dass der Lichtbogen (22) zwischen einer Elektrode (21) und mindestens einen der Verbindungsabschnitte (2a, 3a, 2b, 4b, 4c, 10c, 303a, 304a, 307a, 308a, 403a, 404a, 407a, 408a) erzeugt wird und dass entweder diese Elektrode (21) mindestens zum Teil aus dem Hartlot (30, 130, 230, 330, 430) besteht und dieses von ihr abgeschmolzen wird oder dem Lichtbogen (22) ein separater, mindestens zum Teil aus dem Hartlot (30, 130, 230, 330, 430) bestehender und im Lichtbogen schmelzender Draht zugeführt wird.

3. Verfahren nach Anspruch 1 oder 2, dadurch gekennzeichnet, dass beim Schmelzen des Hartlots (30, 130, 230, 330, 430) ein Schutzgas (23) zugeführt wird, um das geschmolzene Hartlot (30, 130, 230, 330, 430) und mit diesem in Kontakt kommende Flächen der Verbindungsabschnitte (2a, 3a, 2b, 4b, 4c, 10c, 303a, 304a, 307a, 308a, 403a, 404a, 407a, 408a) gegen einen Kontakt mit der Umgebungsluft zu schützen.

4. Verfahren nach einem der Ansprüche 1 bis 3, dadurch gekennzeichnet, dass das verwendete Hartlot (30, 130, 230, 330, 430) im Wesentlichen Kupfer oder eine Kupferlegierung mit vorzugsweise mindestens 95 Gew.% Kupfer, beispielsweise eine Kupfer-Silizium-Legierung, enthält.

5. Verfahren nach einem der Ansprüche 1 bis 4, dadurch gekennzeichnet, dass jeder Verbindungsabschnitt (2a, 3a, 2b, 4b, 4c, 10c, 303a, 304a, 307a, 308a, 403a, 404a, 407a, 408a) entlang einer mindestens teilweise gebogenen Linie verläuft und zum Beispiel einen Innenraum eines Gehäuses und/oder einen Abgas-Durchgang mindestens zum Teil umschliesst.

6. Verfahren nach einem der Ansprüche 1 bis 5, dadurch gekennzeichnet, dass mindestens einer und zum Beispiel jeder der miteinander zu verbindenden Verbindungsabschnitte (2a, 3a, 2b, 4b, 4c, 10c, 303a, 304a, 307a, 308a, 403a, 404a, 407a, 408a) aus Material mit einer Dicke von höchstens 1,5 mm gebildet wird, wobei vorzugsweise mindestens einer und eventuell jeder der miteinander zu verbindenden Verbindungsabschnitte (2a, 3a, 2b, 4b, 4c, 10c, 303a, 304a, 307a, 308a, 403a, 404a, 407a, 408a) mit einer Dicke von höchstens 0,8 mm und beispielsweise 0,3 mm bis 0,7 mm gebildet wird.

7. Verfahren nach einem der Ansprüche 1 bis 6, dadurch gekennzeichnet, dass das Hartlöten derart durchgeführt wird, dass Hartlot (30, 130, 230, 330, 430) mindestens stellenweise zwischen die einander zugewandten Flächen der Verbindungsabschnitte (2a, 3a, 2b, 4b, 4c, 10c, 303a, 304a, 307a, 308a, 403a, 404a, 407a, 408a) fliesst.

8. Verfahren nach einem der Ansprüche 1 bis 7, dadurch gekennzeichnet, dass das Verbinden der Verbindungsabschnitte (2a, 3a, 2b, 4b, 4c, 10c, 303a, 304a, 307a, 308a, 403a, 404a, 407a, 408a) derart durchgeführt wird, dass deren Flächen (2e, 2f, 3e, 3f, 4e, 4f, 10e, 10f) vollständig als Grenzflächen erhalten bleiben und dass von keinem der Verbindungsabschnitte (2a, 3a, 2b, 4b, 4c, 10c, 303a, 304a, 307a, 308a, 403a, 404a, 407a, 408a) Material von diesem in einen andern Verbindungsabschnitt (2a, 3a, 2b, 4b, 4c, 10c, 303a, 304a, 307a, 308a, 403a, 404a, 407a, 408a) fliesst und/oder diffundiert.

9. Verfahren nach einem der Ansprüche 1 bis 8, dadurch gekennzeichnet, dass die Verbindungsabschnitte (2a, 3a, 2b, 4b, 4c, 10c, 303a, 304a, 307a, 308a, 403a, 404a, 407a, 408a) im Wesentlichen aus Stahl gebildet werden und das Hartlot (30, 130, 230, 330, 430) und die Verbindungsabschnitte (2a, 3a, 2b, 4b, 4c, 10c, 303a, 304a, 307a, 308a, 403a, 404a, 407a, 408a) beim Verbinden der letzteren auf Temperaturen erhitzt werden, die weniger als 1500°C, zweckmässigerweise höchstens 1400°C und zum Beispiel höchstens 1300°C betragen, wobei zum Beispiel mindestens einer der Verbindungsabschnitte (2a, 3a, 2b, 4b, 4c, 10c, 303a, 304a, 307a, 308a, 403a, 404a, 407a, 408a) aus austenitischem Stahl und/oder aus ferritischem Stahl und/oder aus Baustahl und/oder aus aluminisiertem Stahl gebildet wird.

10. Verfahren nach einem der Ansprüche 1 bis 9, dadurch gekennzeichnet, dass die Verbindungsabschnitte (2a, 3a, 2b, 4b, 4c, 10c) zu mindestens einem der folgenden Bestandteile gehören:
- zu Gehäuseteilen eines Schalldämpfers (1, 101, 201) und/ oder Katalysators, insbesondere zu einer Endwand (2, 102, 202, 206) oder Zwischenwand (6, 106) und einem Mantel (3, 103, 203, 213), und/oder
- zu einem Gehäuseteil eines Schalldämpfers (1, 101, 201) und/oder Katalysators und zu einem Rohr (4, 10, 104, 204) und/oder einem Halter (11) und/oder
- zu verschiedenen Rohren (4, 10) und/oder
- zu einem einen Abgas-Durchgang begrenzenden, muffenförmigen Verbindungsorgan und einem Gehäuse oder Rohr und/oder
- zu Bestandteilen eines Auspuffkrümmers und/oder
- zu einem Bestandteil eines Auspuffkümmers und eines anderen Auspuffteils und/oder
- zu Bestandteilen eines deformierbaren, inbesondere biegbaren, beispielsweise ein Wellrohr aufweisenden Auspuffelementes und/oder
- zu einem Bestandteil eines deformierbaren, insbesondere biegbaren Auspuffelementes und einem anderen Auspuffteil, beispielsweise einem starren Rohr oder einem Gehäuseteil eines Schalldämpfers und/oder Katalysators und/oder
- zu ein und demselben Blechstück, das derart zu einem Mantel gebogen wurde, dass seine in der Mantel-Längsrichtung verlaufenden Randabschnitte Verbindungsabschnitte bilden.

11. Für ein Kraftfahrzeug bestimmte Abgasanlage mit miteinander verbundenen Verbindungsabschnitten (2a, 3a, 2b, 4b, 4c, 10c, 303a, 304a, 307a, 308a, 403a, 404a, 407a, 408a), von denen jeder aus einem im Wesentlichen metallischen Material besteht und zwei einander abgewandte Flächen (2e, 2f, 3e, 3f, 4e, 4f, 10e, 10f) hat, dadurch gekennzeichnet, dass die Verbindungsabschnitte (2a, 3a, 2b, 4b, 4c, 10c, 303a, 304a, 307a, 308a, 403a, 404a, 407a, 408a) durch ein Hartlot (30, 130, 230, 330, 430) verbunden sind, das einen niedrigeren Schmelzpunkt hat als Materialien, aus denen die Verbindungsabschnitte (2a, 3a, 2b, 4b, 4c, 10c, 303a, 304a, 307a, 308a, 403a, 404a, 407a, 408a) bestehen, dass mindestens ein Teil von mindestens einer der beiden Flächen (2e, 2f, 3e, 3f, 4e, 4f, 10e, 10f) von jedem Verbindungsabschnitt (2a, 3a, 2b, 4b, 4c, 10c, 303a, 304a, 307a, 308a, 403a, 404a, 407a, 408a) einer der beiden Flächen (2e, 2f, 3e, 3f, 4e, 4f, 10e, 10f) des bzw. eines anderen Verbindungsabschnitts (2a, 3a, 2b, 4b, 4c, 10c, 303a, 304a, 307a, 308a, 403a, 404a, 407a, 408a) zugewandt ist und dass das Hartlot (30, 130, 230, 330, 430) und die Verbindungsabschnitte (2a, 3a, 2b, 4b, 4c, 10c, 303a, 304a, 307a, 308a, 403a, 404a, 407a, 408a) beim Hartlöten auf Temperaturen erhitzt wurden, die niedriger sind als Schmelztemperaturen der die Verbindungsabschnitte (2a, 3a, 2b, 4b, 4c, 10c, 303a, 304a, 307a, 308a, 403a, 404a, 407a, 408a) im Wesentlichen bildenden Materialien.

12. Abgasanlage nach Anspruch 11, dadurch gekennzeichnet, dass zwischen den einander zugewandten Flächen (2e, 2f, 3e, 3f, 4e, 4f, 10e, 10f) der miteinander verbundenen Verbindungsabschnitte (2a, 3a, 2b, 4b, 4c, 10c, 303a, 304a, 307a, 308a, 403a, 404a, 407a, 408a) mindestens stellenweise Hartlot (30, 130, 230, 330, 430) vorhanden ist.

13. Abgasanlage nach Anspruch 11 oder 12, dadurch gekennzeichnet, dass die Flächen (2e, 2f, 3e, 3f, 4e, 4f, 10e, 10f) der Verbindungsabschnitte (2a, 3a, 2b, 4b, 4c, 10c, 303a, 304a, 307a, 308a, 403a, 404a, 407a, 408a) überall als Begrenzungen von diesen erhalten sind und dass keiner der Verbindungsabschnitte (2a, 3a, 2b, 4b, 4c, 10c, 303a, 304a, 307a, 308a, 403a, 404a, 407a, 408a) mit dem bzw. einem andern Verbindungsabschnitt (2a, 3a, 2b, 4b, 4c, 10c, 303a, 304a, 307a, 308a, 403a, 404a, 407a, 408a) verschweisst ist.

14. Abgasanlage nach einem der Ansprüche 11 bis 13, dadurch gekennzeichnet, dass mindestens einer und zum Beispiel jeder der miteinander verbundenen Verbindungsabschnitte (2a, 3a, 2b, 4b, 4c, 10c, 303a, 304a, 307a, 308a, 403a, 404a, 407a, 408a) eine Dicke von höchstens 1,5 mm hat, wobei vorzugsweise mindestens einer und eventuell jeder der miteinander verbundenen Verbindungsabschnitte (2a, 3a, 2b, 4b, 4c, 10c, 303a, 304a, 307a, 308a, 403a, 404a, 407a, 408a) eine Dicke von höchstens 0,8 mm und zum Beispiel von 0,3 mm bis 0,7 mm hat.
